# EUROPÄISCHE PATENTSCHRIFT

(11) **EP 2 190 626 B1**
(45) Veröffentlichungstag und Bekanntmachung des Hinweises auf die Patenterteilung: **02.01.2013**
(21) Anmeldenummer: 08783451.1
(22) Anmeldetag: 18.08.2008
(51) Int. Cl.: B24B 19/08, B24B 49/12, B24B 35/00, G01B 11/24

(54) **VERFAHREN UND EINRICHTUNG ZUR BEARBEITUNG VON WERKSTÜCKEN**
METHOD AND DEVICE FOR MACHINING WORKPIECES
PROCÉDÉ ET DISPOSITIF D'USINAGE DE PIÈCES

(30) Priorität: 17.08.2007 CH 12982007
(43) Veröffentlichungstag der Anmeldung: 02.06.2010
(60) Teilanmeldung: 12006089.2
(73) Patentinhaber: L. Kellenberger & Co. AG, 9009 St. Gallen (CH)
(72) Erfinder: HONEGGER, Daniel, CH-7000 Chur (CH); THURNHERR, Hugo, CH-9010 St. Gallen (CH); KEFERSTEIN, Claus, P., CH-9470 Werdenberg (CH); GSCHWEND, Bernard, CH-9302 Kronbühl (CH); RITTER, Markus, CH-2540 Grenchen (CH)
(74) Vertreter: Mötteli-Mantelli, Novella
(86) Internationale Anmeldenummer: PCT/CH2008/000351
(87) Internationale Veröffentlichungsnummer: WO 2009/023979

(56) Entgegenhaltungen:
- EP-A- 1 747 848
- DE-A1- 3 610 160
- DE-A1- 10 205 212
- JP-A- 2002 028 859
- JP-A- 2003 136 368

## Beschreibung

Die vorliegende Erfindung betrifft ein Verfahren zur Bearbeitung von Werkstücken, insbesondere zum Schleifen der Oberfläche von unrunden Werkstücke gemäß Oberbegriff des Patentanspruchs 1, sowie eine Einrichtung zur Durchführung dieses Verfahrens gemäß Oberbegriff des Patentanspruchs 8.

Verfahren der genannten Gattung sind bereits bekannt. In der primitivsten Weise werden solche Verfahren so durchgeführt, dass man das Werkstück, welches in einer Bearbeitungsmaschine eingespannt ist und bearbeitet wurde, z.B. mit Hilfe einer Schublehre oder dgl. misst, noch während das Werkstück in der Maschine eingespannt ist. Die Präzision einer solchen Bearbeitung ist gering. Bei höheren und hohen Ansprüchen an die Präzision der Bearbeitung von Werkstücken wird das jeweilige Werkstück nach einem Bearbeitungsvorgang aus der Bearbeitungsmaschine herausgenommen, in einer präzisen Messvor- richtung eingespannt und mit Hilfe dieser Messvorrichtung genau gemessen Bei der jeweiligen Einspannung des Werkstückes, d.h. sowohl in der. Messvorrichtung als auch in der Bearbeitungsmaschine erfolgen Abweichungen von der ersten bzw. vorherigen Einspannung des Werkstückes. Hinzu kommt noch die Tatsache, dass in der Bearbeitungsmaschine normalerweise eine andere Tem- peratur herrscht als in der Messvorrichtung, was ebenfalls einen Einfluss auf die Messdaten hat. Solche negativen Einflüsse kumulieren sich, sodass es normalerweise unmöglich ist, eine bestimmte Präzisionsgrenze zu überschreiten.

Die Vorrichtung von DE 102 05 212 A1 erwähnt nebenbei, dass ein ein optischer Sensor anstatt eines berührend arbeitenden Sensors verwendet werden kann. Es werden jedoch keine Details genannt, zum Beispiel welche Art eines optischen Sensors sich dafür eignet oder wie die Messung mit einem solchen Sensor funktionieren würde.

Die Aufgabe der vorliegenden Erfindung ist, den genannten Nachteil sowie noch weitere Nachteile des Standes der Technik zu beseitigen.

Diese Aufgabe wird beim Verfahren der eingangs genannten Gattung erfindungsgemäss so gelöst, wie dies im kennzeichnenden Teil des Patentanspruchs 1 definiert ist.

Die genannte Aufgabe wird auch durch eine Einrichtung zur Durchführung des genannten Verfahrens gelöst, welche im Patentanspruch 8 definiert ist.

Nachstehend werden Ausführungsbeispiele der vorliegenden Erfindung anhand der beiliegenden Zeichnungen näher erläutert. Es zeigt:
Fig. 1 perspektivisch eine Maschine zum Präzisionsschleifen mit einem Sensor zur Abtastung der Oberfläche von Werkstücken,
Fig. 2 perspektivisch eine erste Ausführung der Anordnung zur Behandlung von Werkstücken,
Fig. 3 perspektivisch eine zweite Ausführung der Anordnung zur Behandlung von Werkstücken, weiche auch eine Reinigung von Werkstückoberflächen sowie eine Messung während der Bearbeitung ermöglicht,
Fig. 4 ein Segment aus einem Querschnitt durch ein noch nicht bearbeitetes Werkstück mit runder Aussenfläche, und
Fig. 5 das Funktionsprinzip eines chromatischen Sensors.

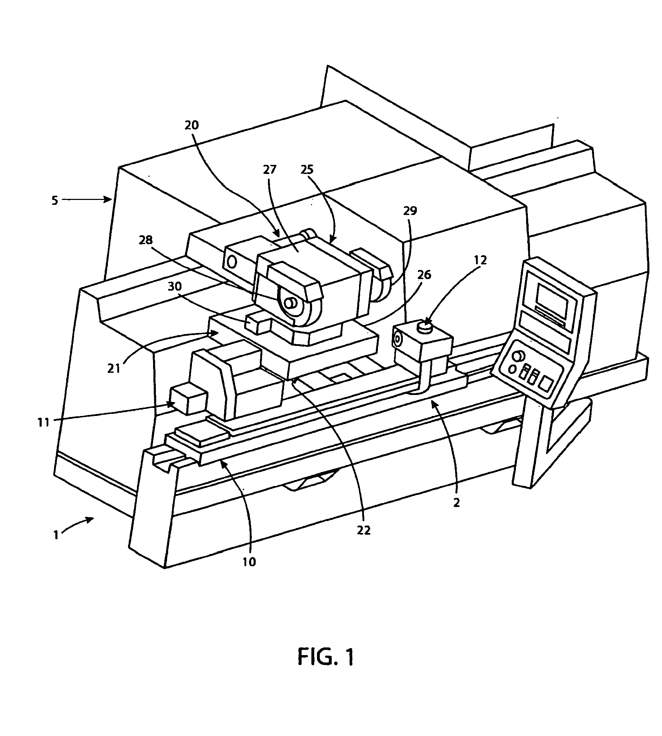

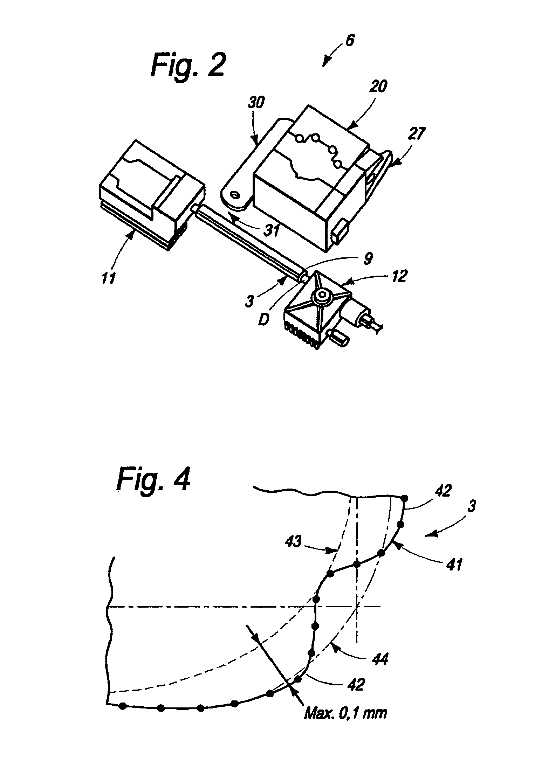

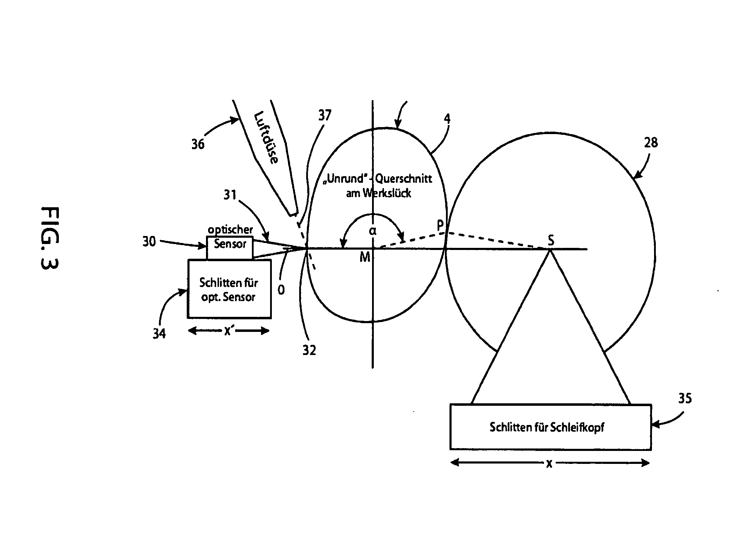

Eine Einrichtung, mit deren Hilfe das vorliegende Verfahren durchgeführt werden kann, ist in Fig. 1 perspektivisch dargestellt. Diese Einrichtung ist im dargestellten Fall eine Schleifmaschine mit bahngesteuerter (synchron) X- und C-Achse. Diese Einrichtung weist ein längliches Maschinenbett 1 auf, an welchem eine Führungsbahn für eine Vorrichtung 2 vorhanden ist, die zur Halterung der zu bearbeitenden Werkstücke 3 (Fig. 2 bzw. 3) bestimmt und ausgeführt ist. Dieser Werkstückhalter 2 weist eine längliche Grundplatte 10 auf, deren Unterseite so ausgebildet ist, dass dieser Schlitten 10 entlang der Führungsbahn am Maschinenbett 1 längsverschiebbar gelagert ist.

Auf der Oberseite der Grundplatte 10 befindet sich ein an sich bekannter Spindelstock 11, welcher der Grundplatte 10 so zugeordnet ist, dass er entlang dieser in einer entsprechenden Führung bewegt werden kann. Dem Spindelstock 11 gegenüber befindet sich ein ebenfalls an sich bekannter Reitstock 12 auf der Grundplatte 10. Dieser Reitstock 12 ist ebenfalls entlang der genannten Führung auf der Oberseite der Grundplatte 10 bewegbar. So können zu bearbeitende Werkstücke 3 zwischen dem Spindelstock 11 und dem Reitstock 12 oder zumindest im Spindelstock 11 eingespannt werden.

Etwa in der Mitte des Maschinenbettes 1 und hinter dem Werkstückhalter 2 ist ein Werkzeughalter 20 der vorliegenden Einrichtung angeordnet. Dieser Werkzeughalter 20 umfasst eine Grundplatte 21, welche mittels Führungen 22 senkrecht zur Längsrichtung des Maschinenbettes 1 bewegt werden kann. Auf diesem zweiten Schlitten 21 ist ein Turm 25 angebracht. Dieser Turm 25 hat einen Unterteil 26, welcher mit der Grundplatte 21 fest verbunden ist. Dieser Turm 25 hat ferner einen Oberteil 27, welcher im Unterteil 26 in einer horizontalen Ebene drehbar und vertikal verschiebbar gelagert ist. Dieser Oberteil 27 des Turmes 25 trägt an sich bekannte Schleifscheiben 28 und 29, welche hier antreibbar gelagert sind. Mit Hilfe der Schleifscheiben 28 und 29 können Werkstücke 3 bearbeitet werden.

Der drehbare Teil 27 des Turmes 25, welcher auch als Revolver 27 genannt werden kann, trägt auch eine Vorrichtung 30 zur berührungslosen Ausmessung der Werkstücke 3, welche im Werkstückhalter 2 der Bearbeitungsmaschine eingespannt sind. Diese Messvorrichtung 30 kann am Revolver 27 so angeordnet sein, dass sie den Schleifscheiben 28 und 29 am Turm 25 gegenüber liegt. Durch Verdrehung des Revolvers 27 kann erreicht werden, dass einmal die Schleifscheiben 28 und 29 und bei einer anderen Stellung des Revolvers 27 die Messvorrichtung 30 der zu bearbeitenden und zu messenden Oberfläche am Werkstück 3 gegenüber stehen. Erfindungsgemäß ist diese Messvorrichtung 30 ein berührungsloser optischer Sensor, welcher als ein chromatischer Weisslichtsensor ausgeführt ist.

Die Einrichtung umfasst auch eine zentrale Steuereinheit 5, welche Vorrichtungen umfasst, die die einzelnen Arbeitsoperationen der Einrichtung und somit auch die Bewegungen der einzelnen Bestandteile dieser Einrichtung nach Massgabe von betreffenden Computerprogrammen steuert.

Fig. 2 zeigt perspektivisch eine erste Ausführung der Messanordnung 6 der vorliegenden Einrichtung, welche den Spindelstock 11 und den Reitstock 12 umfasst, zwischen welchen ein längliches Werkstück 3 gespannt ist. Ferner umfasst diese Messanordnung 6 den optischen Sensor 30, welcher am Werkzeughalter 20 angebracht ist. Die optische Achse O (Fig. 3) des optischen Sensors 30 ist gegen die Aussenfläche des Werkstückes 3 hin gerichtet. In Fig. 2 ist auch ein Kegel 31 zwischen dem Werkstück 3 und dem Sensor 30 dargestellt. Dieser Kegel 31 soll den Gang der Lichtstrahlen zwischen dem Sensor 30 und dem Werkstück 3 andeuten.

Im Scheitelpunkt 32 des Kegels 31 (Fig. 3) befindet sich der Brennpunkt des optischen Sensors 30. Zu beiden Seiten dieses Brennpunktes 32 erstrecken sich je ein Teilbereich des gesamten Messbereiches des Sensors 30, innerhalb welchem der Sensor 30 die Grösse der Abweichungen der Aussenfläche des Werkstückes 3 von der gewünschten bzw. erforderlichen Form dieser Aussenfläche sehr genau messen kann. Dieser Messbereich liegt auf der Rotationsachse des Kegels 31 und er kann eine Länge von etwa 1 mm aufweisen.

Im Grunde genommen sollte sich der optische Sensor 30 ständig in einem Abstand von der Aussenfläche des Werkstückes 3 befinden, welcher innerhalb des Messbereiches des Sensors 30 liegt. Dies kann beispielsweise dadurch sichergestellt werden, dass der Sensor 30 gegenüber dem Werkstück mit Hilfe eines Programms geführt wird, welches analog zu jenem Programm ist, mit dessen Hilfe das Werkzeug gegenüber dem Werkstück geführt wird. Oder der genannte Abstand kann dadurch erreicht werden, dass die durch die Abstandsmessung des Sensors 30 ermittelten Daten auch als Steuerdaten zur Einhaltung des Abstandes zwischen dem Werkstück 3 und dem Sensor 30 benützt werden. Diese Abstandsdaten steuern bei der Anordnung gemäss Fig. 1 und 2 den Abstand des Werkzeughalters 20 vom Werkstückhalter 2.

Die vorliegende Einrichtung ist geeignet zur Bearbeitung von Werkstücken, insbesondere zum Schleifen der Oberfläche von unrunden Werkstücken 3. Das besondere Kennzeichen der vorliegenden Einrichtung bzw. dieser Bearbeitungsmaschine ist, dass das Werkstück 3 in der Maschine eingespannt wird und dass die Oberfläche dieses Werkstücks 3 mit Hilfe der Messvorrichtung berührungslos ausgemessen werden kann, und zwar während das Werkstück 3 im Werkzeughalter 2 eingespannt ist und gedreht wird. Dies ermöglicht beispielsweise, die Oberfläche des Werkstückes 3, ohne dieses bearbeiten zu müssen, genauestens auszumessen und die dabei ermittelten Werte in der Steuereinheit 5 zur weiteren Benützung derselben zu speichern.

Nach der Einspannung des Werkstückes 3 in der Bearbeitungsmaschine kann der Revolver 27 so gedreht werden, dass die gewünschte der Schleifscheiben 28 bzw. 29 dem eingespannten Werkstück 3 gegenüber steht. Nach Massgabe des betreffenden Programms kann die Oberfläche des Werkstückes mittels der ausgewählten Schlefscheibe bearbeitet, d.h. geschliffen werden. Nach der Beendigung dieses Bearbeitungsvorgangs wird der Revolver 27 so gedreht, dass die Schleifscheibe weg geschwenkt wird und dass der optische Sensor 30 jetzt dem Werkstück 3 gegenüber steht, und zwar etwa so, wie dies in Fig. 2 dargestellt ist. Jetzt wird die bearbeitete Oberfläche dieses Werkstücks 3 mit Hilfe der optischen Messvorrichtung 30 berührungslos ausgemessen, und zwar während das Werkstück 3 in der Maschine weiterhin eingespannt bleibt.

Gemäss einer weiteren Ausführung des vorliegenden Verfahrens wird ein bereits fertiges Erzeugnis, welches als Muster für weitere Erzeugnisse dient, im Werkstückhalter 2 eingespannt. Der Revolver 27 wird so gedreht, dass die optische Messvorrichtung 30 der Oberfläche dieses Musterstückes gegenüber steht. Die Oberfläche dieses Musterstückes wird mittels der Messvorrichtung 30 möglichst genau ausgemessen, damit Messdaten für die Herstellung gleicher Erzeugnisse gewonnen werden. Diese Musterdaten werden in der Steuereinheit gespeichert. Diese gespeicherten Messdaten dienen dann als Steuerdaten zur Bearbeitung der Werkstücke 3 durch die Schleifscheiben 28 bzw. 29.

Die Messdaten, welche nach einem Bearbeitungsvorgang der Oberfläche des Werkstückes 3 während der darauf folgenden Messung ermittelt worden sind, werden mit den gespeicherten Referenz- bzw. Musterdaten verglichen. Die dabei ermittelte Differenz zwischen den gemessenen Daten und den Referenzdaten ergibt Korrekturdaten für den nächsten Bearbeitungsvorgang des Werkstücks 3, ohne dass das Werkstück 3 aus der Bearbeitungsmaschine ausgespannt werden muss. Dabei können die Bearbeitungsvorgänge mit den Messvorgängen abwechslungsweise durchgeführt werden, und zwar so, dass man sich den gewünschten Abmessungen des Erzeugnisses iterativ nähert.

Durch eine weitere Ausführung des vorliegenden Verfahrens können optimale Technologieparameter ermittelt werden. Als Technologieparameter kommen unter anderem auch die Werkstückdrehzahl und die Zustellrate der Werkzeuge in Frage. Die Werkstückdrehzahl kann entweder konstant oder abhängig von der Werkstücklage sein.

Zum genannten Zweck wird das Werkstück 3 zyklisch behandelt, wobei ein Behandlungszyklus zumindest eine Bearbeitung und zumindest eine Ausmessung der Werkstückoberfläche einschliesst. Die technologischen Daten, wie die Drehzahl des Werkstücks, der Zustellbetrag des Werkzeuges usw. werden während der einzelnen Behandlungszyklen innerhalb eines Bereichs geändert. Nach der Durchführung aller Behandlungszyklen wird ermittelt, welches die optimalen technologischen Daten für die Bearbeitung des Werkstückes 3 sind oder/und welche der technologischen Daten, die während der Behandlungszyklen angewendet wurden, allfällige Fehler verursacht haben.

Im Einzelnen kann man so vorgehen, dass die Extremwerte der Technologiegrössen als jener Bereich vorgegeben werden, innerhalb welchem diejenigen Werte gesucht werden, welche die Abweichung der Form der Werkstückaussenfläche minimal machen oder bei gegebener Abweichung die grösste Produktivität ermöglichen. Dazu wird auf einem Werkstück das Profil in Tranchen bis zu einem Nennmass abgetragen und jedes Teilprofil wird ausgemessen. In jedem Teilprofil wird jeweils eine Technologiegrösse variiert und vor der letzten Tranche werden die definitiven Technologiegrössen aus allen vorangehenden Messungen errechnet. Mit diesen Grössen wird auf Nennmass geschliffen. Dieser Prozess wird mit anderen Extremwerten wiederholt, wenn die gewünschte Genauigkeit der Form der Werkstückoberfläche nicht erreicht worden ist.

Neben der optischen Ausmessung der bearbeiteten oder der zu bearbeitenden Aussenfläche der in der Maschine eingespannten Werkstücke 3 kann mit Hilfe der optischen Messvorrichtung 30 auch die Lage zumindest einer der Seitenflächen des Werkstücks 3, d.h. in der Z-Richtung, berührungslos ermittelt werden. Dazu wird der Kegel 31 optischen Sensors 30 ausgenützt. Der Sensor 30 wird so weit seitwärts gefahren, bis sein Brennpunkt ausserhalb der Aussenfläche des Werkstückes 3 liegt. Bei dieser Lage des Sensors 30 kann die Seitenkante 9 (Fig. 2) des Werkstückes in den Gang der die konische Mantelfläche des Lichtkegels 31 bildenden Lichtstrahlen kommen. Diese Unterbrechung der genannten Strahlen kann detektiert werden und aus der Position des Sensors 30 kann auf die Lage der Seitenfläche des Werkstückes geschlossen werden.

Das vorliegende Verfahren kann auch zur Einrichtung des optischen Sensors 30 dienen, welcher beispielsweise am Revolver 27 angebracht ist. Bei dieser Ausführung des vorliegende Verfahrens wird ein Referenzstück bzw. Erzeugnis in der Bearbeitungsmaschine eingespannt und anschliessend in einem Einmessungszyklus ausgemessen. Aus diesem Einmessungszyklus resultieren Daten, welche als Korrekturdaten zur Einrichtung der optischen Messvorrichtung 30 benutzt werden können.

Beim Einrichten eines berührungslosen Messsystems bzw. des optischen Sensors 30, dem sog. "Einmessen", sorgt man dafür, dass die Lage des Messsystems bzw. Sensors exkat vermessen wird. Vorzugsweise wird hierfür ein Werkstück-Original mit bekannter Geometrie, ein sog. "Normal", zunächst vermessen und dann diese Werte mit Geometrie-Solldaten verglichen. Abweichungen werden als Grundlage für Korrekturen zur Kalibrierung verwendet. Dieses Einmessen kann jederzeit erfolgen, vorzugsweise jedoch beim Einschalten der Einrichtung oder nach längeren Betriebsunterbrüchen. Das Einmessen ermöglicht ein exaktes Vermessen der geometrischen Abmessungen des Werkstückes 3.

Wenn es sich um das Schleifen von unrunden Werkstücken handelt, dann ist auch die Anfangslage des Werkstückes 3, d.h. bevor dieses bearbeitet wird, von Bedeutung. Zu diesem Zweck wird das Werkstück 30 mit optisch abtastbaren Marken versehen. Diese Marken werden nach dem Einspannen des Werkstücks 3 in der Bearbeitungsmaschine optisch abgetastet und die so gewonnenen Daten werden zur Orientierung bzw. Ausrichtung des Werkstücks 3 in der C-Richtung in der Bearbeitungsmaschine verwendet.

Die Lage des Brennpunktes des Lichtkegels kann auch dazu ausgenützt werden, dass die Grösse des Abstandes geändert wird, welchen es zwischen dem optischen Abtaster 30 und der Oberfläche des Werkstücks 3 gibt. Diese Änderung der Lage des Abtasters 30 erfolgt in Abhängigkeit von der Abweichung der Oberfläche von der vorgegebenen Form, und zwar derart, dass die jeweils gemessene Stelle der Oberfläche des Werkstücks innerhalb des genannten Messbereichs des Abtasters liegen bleibt.

Bei der ersten Messanordnung 6 kann die Bearbeitung, d.h. Fertigen und die Ausmessung, d.h. Messen der Oberfläche von Werkstücken nur abwechselungsweise durchgeführt werden, weil für die Durchführung dieser Arbeitsoperation der Revolver 27 immer wieder gedreht werden muss. Das Werkstück 3 wird während dem Schleifvorgang mit Hilfe eines flüssigen Kühlmittels gekühlt. Dieses Kühlmittel bildet eine dünne Schicht auf der gekühlten Aussenfläche. Bei der Präzision des Schleifvorganges spielt diese Kühlmittelschicht jedoch schon eine Rolle, obwohl diese Kühlmittelschicht sehr dünn ist. Bei der ersten Anordnung 6 kann die Schicht des Kühlmittels zwischen der Fertigung und der Messung in einer an sich bekannten Weise von der Aussenfläche entfernt werden.

Fig. 3 zeigt schematisch und vergrössert eine zweite Ausführung der Behandlungsanordnung 7, welche so ausgeführt ist, dass die Fertigung und die Messung der Oberfläche von Werkstücken praktisch gleichzeitig durchgeführt werden kann.

Das Werkzeug 28 befindet sich an einem Werkzeughalter 35, welcher einfacher ausgeführt sein kann als dies in Fig. 1 dargestellt ist. Dies deswegen, weil der Werkzeughalter 35 nur senkrecht zur Drehachse D (Fig. 2) des Werkstückes 3 bewegt werden muss. Der berührungslose Sensor 30 ist gegen eine andere Stelle der Aussenfläche des Werkstückes 3 gerichtet. Im in Fig. 3 dargestellten Fall befindet sich der Sensor 30 an der zum Werkzeug 28 gegenüber liegenden Seite des Werkstückes 3. Bei dieser Anordnung 7 benötigt der Sensor 30 allerdings einen eigenen Schlitten 34. Bei dieser Behandlungsanordnung 7 kann die Form der durch das Werkzeug 28 behandelten Aussenfläche praktisch gleichzeitig gemessen werden. Dazu braucht die zu messende Stelle der Aussenfläche nur die Strecke vom Werkzeug 28 bis zum Sensor 30 zurückzulegen, welche durch den Winkel Alpha in Fig. 3 angegeben ist. Diese Strecke Alpha ist in jedem Fall kleiner als eine Umdrehung des Werkstückes, d.h. kleiner als 360 Grad.

Damit der Sensor 30 oder ein anderes berührungsloses Messsystem, das in der Einrichtung verwendet wird, brauchbare Messergebnisse liefert, muss die Messfläche zumindest an der Messstelle, wo das Messsystem Messungen durchführt, gereinigt werden. Insbesondere Späne, Kühlmittel etc. müssen von der Oberfläche/Messfläche entfernt werden, um eine Verfälschung der Messergebnisse zu verhindern.

Die Reinigung der Messfläche des Werkstückes 3 kann manuell vor oder nach seinem Einspannen erfolgen. Die Messstelle und deren unmittelbare Umgebung auf der Oberfläche des Werkstücks wird lokal bzw. punktuell gereinigt. Dies kann durch einen auf die Messstelle gerichteten Druckluftstrahl, durch Trocknen mit Infrarot oder durch Ultraschall erfolgen. Besonders vorteilhaft ist es, wenn diese Massnahmen in Kombination durchgeführt werden, z.B. Trocknen mittels Infrarot und Beseitigung von Abrieb, Staub oder Spänen mittels Druckluft und/oder Ultraschall.

Anstelle dieses punktuellen Reinigens zumindest an oder im Bereich der Messstelle ganz nach dem Motto "Messfokus = Reinigungsfokus" oder ergänzend zu diesem punktuellen Reinigen kann auch ein zusätzlicher Reinigungsschritt am Werkstück 3 vorgesehen werden, und zwar vorzugsweise an seiner gesamten Oberfläche. Auch dies kann durch Blasen von Druckluft auf die zu reinigende Oberfläche erfolgen, wodurch an der Oberfläche anhaftende Partikel oder Flüssigkeiten weggeblasen werden. Alternativ kann dieses flächige Reinigen des Werkstückes 3 auch mittels Bürsten, Abstreifern, Lappen, etc. (nicht gezeigt) und/oder durch Drehen des Werkstückes 3 mit hoher Drehzahl erfolgen, wodurch die festen oder flüssigen Verunreinigungen abgestreift und/oder durch Zentrifugalkraft abgeschleudert werden. Solche Bürsten oder Abstreifer können als rotierbare Gebilde ausgelegt sein, die vorzugsweise mit den ebenfalls rotierbaren Schleifscheiben 28, 29 gekoppelt sein können.

Die bereits besprochene Schicht aus dem flüssigen Kühlmittel kann auf dem Weg vom Werkzeug 28 zum Sensor 30 von der Aussenfläche des Werkstückes 3 entfernt werden. Dies kann beispielsweise mit Hilfe einer Düse 36 erreicht werden, aus welcher ein intensiver Luftstrahl 37 austritt. Dieser Luftstrahl 37 ist auf jene Stelle der Aussenfläche oder kurz davor gerichtet sein, wo sich der Fokus 32 des Sensors 30 befindet. Sonst kann auch eine mechanischer Abstreifer (nicht dargestellt) benützt werden, welcher dem Sensor 30 vorgeschaltet ist. Es ist auch denkbar ein mathematisches Verfahren zur Berücksichtigung der Kühlmittelschicht zu verwenden. Denn die Kühlmittelschicht hat charakteristische Eigenschaften, beispielsweise eine bestimmte Dicke. Diese Eigenschaften können errechnet oder gemessen werden und die so gewonnenen Daten werden als Korrekturdaten zu den Daten hinzugefügt, welche der Sensor 30 liefert. In dieser Weise können die durch die Kühlmittelschicht verursachten Abweichungen weggefiltert werden.

Fig. 4 zeigt ein Segment aus einem Querschnitt durch ein noch nicht bearbeitetes Werkstück 3 mit gekrümmter Aussenfläche. Diese Aussenfläche umfasst die effektive Aussenfläche 41 des noch nicht geschliffenen Werkstückes 3, welche Abweichungen 42 von der gewünschten gekrümmten Aussenfläche 43 des Werkstückes 3 aufweist. Das die Abweichungen 42 noch aufweisende Werkstück 3 wird zunächst mit einem Aufmass 44 geschliffen und dann gemessen. Die Angaben über diese Ist-Kontur 44 werden in das Steuerprogramm der Sollkontur 43 eingerechnet und dass Werkstück 3 wird mit dem so modifizierten Programm auf Nennmass 43 geschliffen. Die "korrigierte" Sollkontur ist wiederum Basis für die Erzeugung der Parallelkontur des folgenden Werkstücks, sodass sich die Sollkontur adaptiv einer idealen Vorgabe nähert.

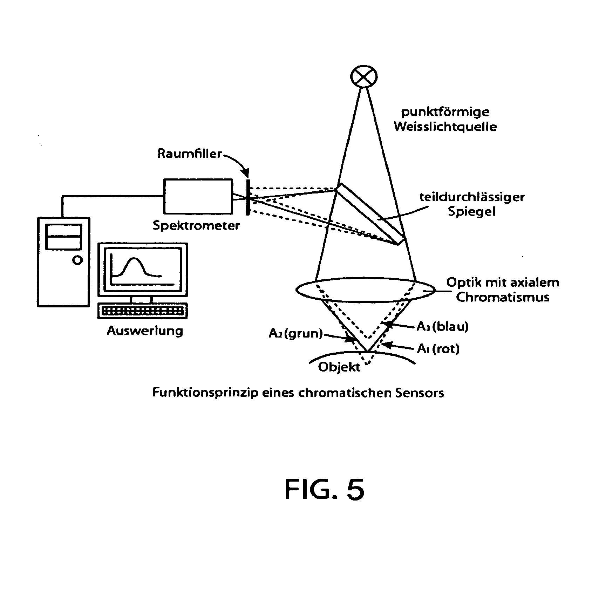

In Fig. 5 ist das Funktionsprinzip eineschromatischen Sensors dargestellt.

Mit dem berührungslosen Sensor 30 kann man die Ist-Kontur einer gekrümmten Oberfläche sehr genau erfassen. Weil die vorliegende Art der Ausmessung der Ist-Kontur so genau ist, kann die Lage des Rohlings in der Schleifmaschine sehr genau bestimmt werden. Dies bietet die Möglichkeit, dass die zum Schleifen bestimmten Rohlinge ein Aufmass aufweisen können, welches kleiner ist als dies bisher möglich war. Dieses so kleine Aufmass verkürzt die Schleifzeit. Dadurch wird die Produktivität des Schleifprozesses erhöht.

## Patentansprüche

1. Verfahren zur Bearbeitung von Werkstücken, insbesondere zum Schleifen der Oberfläche von unrunden Werkstücken, wobei ein Werkstück (3) in eine Bearbeitungsmaschine eingespannt wird und die Oberfläche dieses Werkstücks mit Hilfe einer optischen Messvorrichtung (6) berührungslos ausgemessen wird während das Werkstück (3) in der Maschine eingespannt ist, **dadurch gekennzeichnet, dass** die optische Messvorrichtung (6) einen chromatischen Weisslichtsensor (30) aufweist, wobei die Bearbeitungsvorgänge mit den Messvorgängen computergesteuert abwechslungsweise durchgeführt werden, so dass man sich den gewünschten Abmessungen des Erzeugnisses iterativ nähert, und wobei die Grösse des Abstandes des chromatischen Weisslichtsensors (30) von der Oberfläche des Werkstücks in Abhängigkeit von der Abweichung der Oberfläche des Werkstücks von der vorgegebenen Form geändert wird, damit die jeweils vermessene Stelle der Oberfläche des Werkstücks innerhalb des Messbereichs des chromatischen Weisslichtsensors (30) bleibt.

2. Verfahren nach Anspruch 1, **dadurch gekennzeichnet, dass** zunächst ein Werkstück möglichst genau ausgemessen wird, damit Messdaten für die Herstellung weiterer Erzeugnisse gewonnen werden, dass diese Messdaten gespeichert werden, und dass diese Messdaten als Steuerdaten zur Bearbeitung der Werkstücke (3) und als Referenzdaten zur Ausmessung der bearbeiteten Werkstücke in situ verwendet werden.

3. Verfahren nach Anspruch 2, **dadurch gekennzeichnet, dass** die Messdaten, welche nach einer Bearbeitung des Werkstücks (3) während der darauf folgenden Messung desselben ermittelt worden sind, mit den gespeicherten Referenzdaten verglichen werden und dass die Differenz zwischen den gemessenen Daten und den Referenzdaten als Korrekturdaten für den nächsten Bearbeitungsvorgang des Werkstücks verwendet werden, ohne dass das Werkstück (3) aus der Bearbeitungsmaschine ausgespannt wird.

4. Verfahren nach Anspruch 1, **dadurch gekennzeichnet, dass** das Werkstück (3) zyklisch behandelt wird, wobei ein Behandlungszyklus zumindest eine Bearbeitung und zumindest eine Ausmessung des Werkstücks (3) einschliesst, dass die technologischen Daten wie die Drehzahl des Werkstücks, der Zustellbetrag des Werkzeuges usw. während der einzelnen Behandlungszyklen innerhalb eines Bereichs geändert werden und dass nach der Durchführung aller Behandlungszyklen ermittelt wird, welches die optimalen technologischen Daten für die Bearbeitung des Werkstücks sind oder/und welche der technologischen Daten, welche während der Behandlungszyklen angewendet wurden, allfällige Fehler verursacht haben.

5. Verfahren nach Anspruch 1, **dadurch gekennzeichnet, dass** neben der optischen Ausmessung der bearbeiteten oder der zu bearbeitenden Aussenfläche des in der Maschine eingespannten Werkstücks (3) auch die Lage zumindest einer der Seitenflächen des Werkstücks in der Z-Richtung optisch ermittelt wird.

6. Verfahren nach Anspruch 2, **dadurch gekennzeichnet, dass** ein Referenzstück bzw. Erzeugnis in der Bearbeitungsmaschine eingespannt und anschliessend in einem Einmessungszyklus ausgemessen wird und dass die aus dem Einmessungszyklus resultierenden Daten als Korrekturdaten zur Einrichtung der optischen Messvorrichtung benutzt werden.

7. Verfahren nach Anspruch 1, **dadurch gekennzeichnet, dass** das Werkstück (3) mit optisch abtastbaren Marken versehen ist, dass diese Marken nach dem Einspannen des Werkstücks in der Bearbeitungsmaschine abgetastet werden und dass die so gewonnen Daten zur Orientierung bzw. Ausrichtung des Werkstücks in der C-Richtung in der Bearbeitungsmaschine verwendet werden.

8. Machine zur Bearbeitung von Werkstücken, insbesondere zum Schleifen der Oberfläche von unrunden Werkstücken (3), mit
einer Vorrichtung (2) zur Halterung des zu bearbeitenden Werkstücks (3),
einem Werzeughalter (20),
bahngesteuerten X- und C-Achsen und
einer optischen Messvorrichtung (6) zur berührungslosen Messung der Oberfläche des Werkstücks, **dadurch gekennzeichnet, dass** die Messvorrichtung (6) einen chromatischen Weisslichtsensor aufweist und die Einrichtung eine zentrale Steuereinheit mit Computerprogrammen aufweist, die zur Durchführung des Verfahrens nach Anspruch 1 adaptiert sind.

9. Maschine nach Anspruch 8, **dadurch gekennzeichnet, dass** die Bearbeitungsmaschine eine Schleifmaschine mit bahngesteuerter (synchron) -und C-Achse ist.

## Claims

1. A method for machining workpieces, in particular for grinding the surface of non-round workpieces (3), wherein the workpiece (3) is clamped within the machining unit and the surface of said workpiece is contactless measured by means of an optical measuring device (6) while the workpiece is clamped within the machine, **characterized in that** the optical measuring device (6) comprises a chromatic white light sensor (30), wherein the machining operations are carried out in a computer-controlled manner alternating with the measuring operations and in such a manner that the desired dimensions of the product are approached iteratively, and wherein the extent of the distance between the optical sensor and the surface of the workpiece is changed depending on the deviation of the surface from the specified form so that the respectively measured area of the surface of the workpiece remains within the measuring range of the chromatic white light sensor (30).

2. The method according to claim 1, **characterized in that** first a product is measured as accurately as possible so that measuring data for the manufacturing of further products can be obtained, that these measuring data are stored, and that these measuring data can be used in situ as control data for the machining of the workpieces (3) and as reference data for measuring the machined workpieces.

3. The method according to claim 2, **characterized in that** the measuring data determined after machining the workpiece (3) and during the subsequent measuring of the same are compared with the stored reference data and that the difference between the measured data and the reference data is used as correction data for the next machining operation of the workpiece without the workpiece (3) being unclamped from the machining unit.

4. The method according to claim 1, **characterized in that** the workpiece (3) is processed in cycles, wherein one processing cycle includes at least one machining operation and at least one measuring operation of the workpiece (3), that the technical parameters such as rotational speed of the workpiece, the infeed rate of the tool, etc. are changed within one range during the individual processing cycles, and that after completion of all processing cycles, the optimum parameters for the machining of the workpiece and/or which of the parameters used during the processing cycles have caused possible failures is determined.

5. The method according to claim 1, **characterized in that** besides the optical measuring of the machined outer surface or the outer surface to be machined of the workpiece (3) clamped within the machine, also the position of at least one of the lateral surfaces of the workpiece in the Z-direction is determined optically.

6. The method according to claim 2, **characterized in that** a reference piece or product is clamped within the machining unit and is subsequently measured in a calibration cycle, and that the data resulting from the calibration cycle are used as correction data for setting the optical measuring device.

7. The method according to claim 1, **characterized in that** the workpiece (3) is provided with optically scannable markers, that these markers are scanned after the clamping of the workpiece within the machining unit, and that the data obtained in this manner are used for the orientation or the alignment of the workpiece in the C-direction in the machining unit.

8. A machine for the processing of workpieces, in particular for grinding the surface of non-round workpieces, with
a device (2) for holding of the workpieces (3) to be processed;
a tool holder (20),
path controlled X- and C-axes, and
an optical measuring device (6) for contactlessly measuring of the surfaces of the workpiece, **characterized in that** the measuring device (6) comprises a chromatic white light sensor and the arrangement comprises a central computer control unit adapted for the execution of the method of claim 1.

9. The machine according to claim 8, **characterized in that** the machining unit is a grinding machine with path controlled (synchronous) X- and C-axis.

## Revendications

1. Procédé d'usinage de pièces, en particulier destiné à rectifier la surface de pièces en faux rond, dans lequel une pièce (3) est serrée dans une machine d'usinage et la surface de cette pièce est mesurée sans contact à l'aide d'un dispositif optique de mesure (6) pendant que la pièce (3) est serrée dans la machine, **caractérisé en ce que** le dispositif optique de mesure (6) comporte un capteur de lumière blanche chromatique (30), les opérations d'usinage étant exécutées alternativement avec les opérations de mesure, en étant commandées par ordinateur, si bien que l'on s'approche itérativement des dimensions souhaitées du produit, et l'amplitude de la distance entre le capteur de lumière blanche chromatique (30) et la surface de la pièce étant modifiée en fonction de l'écart entre la surface de la pièce et la forme prédéterminée, afin que le point de la surface de la pièce qui est mesuré reste dans la plage de mesure du capteur de lumière blanche chromatique (30).

2. Procédé selon la revendication 1, **caractérisé en ce que**, tout d'abord, une pièce est mesurée de manière aussi précise que possible afin d'obtenir des données de mesure pour la fabrication d'autres produits, **en ce que** ces données de mesure sont enregistrées et **en ce que** ces données de mesure sont utilisées in situ comme données de commande pour l'usinage des pièces (3) et comme données de référence pour la mesure des pièces usinées.

3. Procédé selon la revendication 2, **caractérisé en ce que** les données de mesure qui ont été déterminées après un usinage de la pièce (3) pendant la mesure de cette même pièce qui le suit sont comparées avec les données de référence enregistrées et **en ce que** les différences entre les données mesurées et les données de référence sont utilisées comme données de correction pour l'opération suivante d'usinage de la pièce, sans que la pièce (3) soit retirée de la machine d'usinage.

4. Procédé selon la revendication 1, **caractérisé en ce que** la pièce (3) est traitée cycliquement, un cycle d'usinage comprenant au moins un usinage et au moins une mesure de la pièce (3), **en ce que** les données technologiques comme la vitesse de rotation de la pièce, la valeur d'avance de la pièce, etc., sont modifiées à l'intérieur d'une plage au cours des différents cycles d'usinage et **en ce que**, après exécution de tous les cycles d'usinage, on détermine quelles sont les données technologiques optimales pour l'usinage de la pièce ou/et quelles sont les données technologiques qui ont été utilisées pendant les cycles d'usinage et qui ont causé les éventuelles erreurs.

5. Procédé selon la revendication 1, **caractérisé en ce qu'**outre le mesurage optique de la surface extérieure usinée ou à usiner de la pièce (3) serrée dans la machine, on détermine optiquement aussi la position d'au moins l'une des surfaces latérales de la pièce dans la direction Z.

6. Procédé selon la revendication 2, **caractérisé en ce qu'**une pièce de référence ou un produit est serré dans la machine d'usinage et est ensuite mesuré au cours d'un cycle de mesure initiale et **en ce que** les données résultant du cycle de mesure initiale sont utilisées comme données de correction pour l'installation du dispositif optique de mesure.

7. Procédé selon la revendication 1, **caractérisé en ce que** la pièce (3) est dotée de repères pouvant être lus optiquement, **en ce que** ces repères sont lus après le serrage de la pièce dans la machine d'usinage et **en ce que** les données ainsi obtenues sont utilisées pour orienter ou aligner la pièce dans la machine d'usinage dans la direction C.

8. Machine d'usinage de pièces, en particulier de rectification de la surface de pièces (3) en faux rond, comportant :
un dispositif (2) de maintien de la pièce à usiner (3) ;
un porte-outil (20) ;
des axes X et C à positionnement continu ; et
un dispositif optique de mesure (6) destiné à effectuer une mesure sans contact de la surface de la pièce ;
**caractérisé en ce que** le dispositif de mesure (6) comporte un capteur de lumière blanche chromatique et **en ce que** l'équipement comprend une unité centrale de commande avec des programmes d'ordinateur qui sont conçus pour exécuter le procédé selon la revendication 1.

9. Machine selon la revendication 8, **caractérisée en ce que** la machine d'usinage est une rectifieuse avec axes X et C à positionnement continu (synchrone).
